# EUROPEAN PATENT APPLICATION

(11) **EP 4 819 650 A1**
(43) Date of publication of application: **07.10.2026**
(21) Application number: 25224913.1
(22) Date of filing: 18.12.2025
(51) Int. Cl.: H04W 4/021, H04W 4/02, H04W 64/00, H04W 36/00, H04W 36/14, H04W 36/32, H04W 36/34, H04B 7/15, H04W 4/42, H04W 8/24, H04L 67/00, H04W 74/00

(54) **DEVICE AND METHOD OF CONTROLLING COMMUNICATION MODE OF RADIO COMMUNICATION DEVICE**

(30) Priority: 04.04.2025 KR 20250044175
(71) Applicant: ZN Technologies Co., Ltd., Busan 46744 (KR)
(72) Inventor: CHO, HYUN SIK, 10401 Goyang (KR)
(74) Representative: Pennacchio, Salvatore Giovanni

(57) **Abstract**

A control device obtains position information about a maritime position of a vessel using metal-body communication, based on the position information of the vessel, when the maritime position of the vessel entering a second maritime zone corresponding to a second communication mode from a first maritime zone corresponding to a first communication mode is detected, identifies communication setting information corresponding to the second communication mode, and transmits the communication setting information corresponding to the second communication mode to the wireless relay device to cause the wireless relay device to transmit the communication setting information corresponding to the second communication mode to one or more radio communication devices.

## Description

### CROSS-REFERENCE TO RELATED APPLICATION

This application claims the benefit of Korean Patent Application No. 10-2025-0044175, filed on April 4, 2025, in the Korean Intellectual Property Office, the entire disclosure of which is incorporated herein by reference for all purposes.

### BACKGROUND

### 1. Field of the Invention

The following description relates to a device and method of controlling a communication mode of a radio communication device.

The present disclosure is derived from the support of the following research projects.
[Project Reference Number] 9991008954
[Project Number] 24-SN-TC-01
[Department Name] Multiple departments
[Project Management (Specialized) Institution Name] Agency for Defense Development
[Research Program Name] Civil and Military Technical Cooperation Research and Development (R&D) (Ministry of Trade, Industry, and Energy, Defense Acquisition Program Administration, and Ministry of Science and Information and Communication Technology (ICT))
[Research Project Name] Development of a metalWave wireless communication system within a vessel, using a hull as a medium, for communication over 100 meters (m)
[Project Performing Institution Name] ZN Technologies Co., Ltd.
[Research Period] December 1, 2024 to December 31, 2025

### 2. Description of the Related Art

A maritime zone in which vessels operate may be distinguished by the distance from land. The distance standard may vary by country, but the maritime zone may be divided into coasting (or coastal) waters, territorial waters, and high seas. The coasting (or coastal) waters may be an area where economic or fishing activities are performed and may indicate a maritime area closer to land than territorial waters. The territorial waters may indicate a maritime area within 12 nautical miles from a coastline of land. The high seas may indicate all seas beyond territorial waters and exclusive economic zones and may indicate a maritime area beyond the sovereignty of any specific country. The frequency (e.g., the frequency of wireless communication used for communication of a radio communication device) or frequency band of wireless communication used by a vessel may vary depending on the maritime zone in each country's law. When the maritime zone is changed as the vessel operates, a user of a radio communication device in the vessel may need to manually change the frequency band used for communication of the radio communication device to comply with the communication regulation.

### SUMMARY

According to an embodiment, a control device for controlling a communication mode of a radio communication device based on a position of a vessel, includes memory storing instructions, a processor executing the instructions stored in the memory, and a communication circuit communicating with a wireless relay device via metal-body communication for transmitting a signal using a metal body of the vessel as a medium. The instructions, when executed by the processor, cause the control device to obtain position information about a maritime position of the vessel, based on the position information of the vessel, when the maritime position of the vessel entering a second maritime zone corresponding to a second communication mode from a first maritime zone corresponding to a first communication mode is detected, identify communication setting information corresponding to the second communication mode, and transmit the communication setting information corresponding to the second communication mode to the wireless relay device to cause the wireless relay device to transmit the communication setting information corresponding to the second communication mode to one or more radio communication devices. The first communication mode is a mode having different communication settings from the second communication mode.

The communication setting information includes at least one of a frequency band of wireless communication used in the second maritime zone, a frequency used for the wireless communication, and a strength of a signal of the wireless communication.

The instructions, when executed by the processor, cause the control device to, in response to receiving the communication setting information from the wireless relay device, cause the one or more radio communication devices to change a frequency used for communication between radio communication devices to a frequency used for the wireless communication.

The first communication mode indicates a communication mode when the maritime position of the vessel is in territorial waters, and the second communication mode indicates a communication mode for communicating with a communication facility of a harbor on land when the maritime position of the vessel is in an area defined as closer to the land than the territorial waters. The instructions, when executed by the processor, cause the control device to, in response to receiving the communication setting information from the wireless relay device, cause the one or more radio communication devices to change a frequency used for communication between the one or more radio communication devices to a frequency used for wireless communication of the communication facility of the harbor.

In an embodiment, the first communication mode indicates a communication mode when the maritime position of the vessel is in territorial waters, and the second communication mode indicates a communication mode when the maritime position of the vessel is in high seas. The instructions, when executed by the processor, cause the control device to, in response to receiving the communication setting information from the wireless relay device, cause the one or more radio communication devices to change a frequency used for communication between the one or more radio communication devices to a frequency used for wireless communication of the high seas.

In an embodiment, the first communication mode indicates a communication mode when the maritime position of the vessel is in high seas, and the second communication mode indicates a communication mode when the maritime position of the vessel is in territorial waters. The instructions, when executed by the processor, cause the control device to, in response to receiving the communication setting information from the wireless relay device, cause the one or more radio communication devices to change a frequency used for communication between the one or more radio communication devices to a frequency used for wireless communication of the territorial waters.

The instructions, when executed by the processor, cause the control device to, in response to receiving the communication setting information from the wireless relay device, cause the one or more radio communication devices to change a frequency used for communication between the radio communication device and the wireless relay device to a frequency used for the wireless communication.

The instructions, when executed by the processor, cause the control device to, in response to receiving the communication setting information from the wireless relay device, cause the one or more radio communication devices to adjust a strength of a signal used for communication of the radio communication device to a signal strength of the wireless communication included in the received communication setting information.

The position information is obtained from a global positioning system (GPS) sensor or is determined using a network based on a base station.

The instructions, when executed by the processor, cause the control device to, when the maritime position of the vessel entering the second maritime zone from the first maritime zone is detected, generate a notification request signal for the radio communication device to provide a notification of a change in a maritime zone, and transmit the notification request signal to the wireless relay device to cause the wireless relay device to transmit the notification request signal to the one or more radio communication devices.

According to an embodiment, a control method of controlling a communication mode of a radio communication device using a control device includes obtaining position information about a maritime position of a vessel, based on the position information of the vessel, when the maritime position of the vessel entering a second maritime zone corresponding to a second communication mode from a first maritime zone corresponding to a first communication mode is detected, identifying communication setting information corresponding to the second communication mode, and transmitting communication setting information corresponding to the second communication mode to the wireless relay device to cause the wireless relay device to transmit the communication setting information corresponding to the second communication mode to one or more radio communication devices. The first communication mode is a mode having different communication settings from the second communication mode. The wireless relay device performs metal-body communication for transmitting a signal using a metal body of the vessel as a medium.

The control method further includes, in response to receiving the communication setting information from the wireless relay device, causing the one or more radio communication devices to change a frequency used for communication between the one or more radio communication devices to a frequency used for the wireless communication.

The first communication mode indicates a communication mode when the maritime position of the vessel is in territorial waters, and the second communication mode indicates a communication mode for communicating with a communication facility of a harbor on land when the maritime position of the vessel is in an area defined as closer to the land than the territorial waters. The changing to the frequency used for the wireless communication includes, in response to receiving the communication setting information from the wireless relay device, causing the one or more radio communication devices to change a frequency used for communication between the one or more radio communication devices to a frequency used for wireless communication of the communication facility of the harbor.

In an embodiment, the first communication mode indicates a communication mode when the maritime position of the vessel is in territorial waters, and the second communication mode indicates a communication mode when the maritime position of the vessel is in high seas. The changing to the frequency used for the wireless communication includes, in response to receiving the communication setting information from the wireless relay device, causing the one or more radio communication devices to change a frequency used for communication between the one or more radio communication devices to a frequency used for wireless communication of the high seas.

In an embodiment, the first communication mode indicates a communication mode when the maritime position of the vessel is in high seas, and the second communication mode indicates a communication mode when the maritime position of the vessel is in territorial waters. The changing to the frequency used for the wireless communication includes, in response to receiving the communication setting information from the wireless relay device, causing the one or more radio communication devices to change a frequency used for communication between the one or more radio communication devices to a frequency used for wireless communication of the territorial waters.

The control method further includes, in response to receiving the communication setting information from the wireless relay device, causing the one or more radio communication devices to change a frequency used for communication between a radio communication device and the wireless relay device to a frequency used for the wireless communication.

The control method further includes, in response to receiving the communication setting information from the wireless relay device, adjusting a strength of a signal used for communication of a radio communication device to a signal strength of wireless communication included in the received communication setting information.

The control method includes, when the maritime position of the vessel entering the second maritime zone from the first maritime zone is detected, generating a notification request signal for the radio communication device to provide a notification of a change in a maritime zone, the transmitting of the communication setting information to the wireless relay device includes transmitting the notification request signal to the wireless relay device to cause the wireless relay device to transmit the notification request signal to the one or more radio communication devices.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a diagram illustrating a control device controlling a communication mode of a radio communication device according to an embodiment;
FIG. 2 is a diagram illustrating communication in a vessel using a wireless relay device according to an embodiment;
FIG. 3 illustrates a change in communication settings of a radio communication device when a vessel enters territorial waters of another country from high seas according to an embodiment;
FIG. 4 illustrates a change in communication settings of a radio communication device when a vessel enters another maritime zone according to an embodiment;
FIG. 5 illustrates operations of a control method of controlling a communication mode of a radio communication device according to an embodiment; and
FIG. 6 is a block diagram of components of a control device according to an embodiment.

### DETAILED DESCRIPTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly, the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

As used herein, the singular form is intended to include the plural forms as well, unless the context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which the present disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and a repeated description related thereto will be omitted.

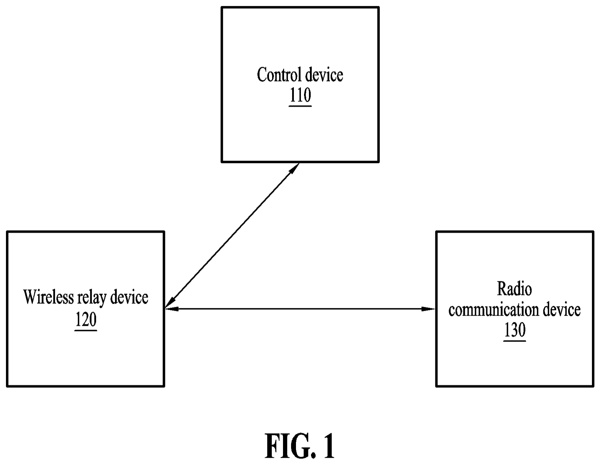

FIG. 1 is a diagram illustrating a control device controlling a communication mode of a radio communication device according to an embodiment.

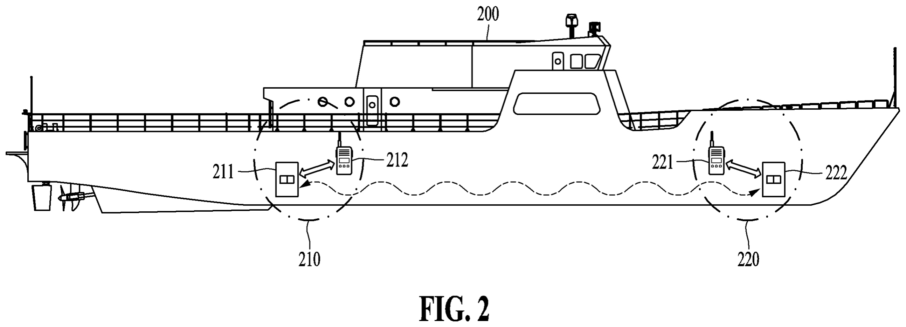

Referring to FIG. 1, a radio communication device 130 used by a vessel (e.g., a vessel 200 of FIG. 2) may perform wireless communication via a frequency of a different frequency band depending on a maritime area where the vessel is positioned. The frequency band and frequency used for wireless communication of the radio communication device 130 may be differently defined according to the laws of each country. When the maritime zone where the vessel is positioned is changed, a control device 110 may cause the radio communication device 130 to change the frequency used for wireless communication of the radio communication device 130 to a frequency defined in the maritime zone where the vessel is positioned. The control device 110 may reduce the inconvenience of the user to manually change the frequency band used for wireless communication of the radio communication device 130, even if the maritime zone of the vessel is changed.

The control device 110 may transmit communication setting information to a wireless relay device 120 so that the wireless relay device 120 transmits the communication setting information to the radio communication device 130.

The control device 110 may obtain position information about a maritime position of the vessel and identify the communication setting information based on the position information of the vessel. For example, when the control device 110 detects that the maritime position of the vessel enters a second maritime zone (e.g., high seas) corresponding to a second communication mode from a first maritime zone (e.g., territorial waters) corresponding to a first communication mode based on the position information of the vessel, the control device 110 may identify communication setting information corresponding to the second communication mode. The position information of the vessel may be obtained from a global positioning system (GPS) system or may be determined the position information of the vessel using a network based on a base station. For example, the control device 110 may determine the maritime position of the vessel based on triangulation using a base station positioned on land. The communication setting information may include at least one of a frequency band of wireless communication used in the second maritime zone, a frequency used for wireless communication, and a signal strength of wireless communication.

The control device 110 may transmit communication setting information corresponding to the second communication mode to the wireless relay device 120 so that the wireless relay device 120 transmits the communication setting information corresponding to the second communication mode to one or more radio communication devices 130. The first communication mode may have different communication settings from the second communication mode.

When the control device 110 detects that the maritime position of the vessel enters the second maritime zone from the first maritime zone, the control device 110 according to an embodiment may generate a notification request signal (e.g., "Entered Korean territorial waters") for the radio communication device 130 to provide a notification of a change in the maritime zone. The control device 110 may transmit the notification request signal to the wireless relay device 120 so that the wireless relay device 120 transmits the notification request signal to one or more radio communication devices 130.

The wireless relay device 120 may simultaneously or individually communicate with the control device 110 and the radio communication device 130. The wireless relay device 120 may perform metal-body communication for communication mode control of the control device 110 and the radio communication device 130. For example, the wireless relay device 120 may receive the communication setting information corresponding to the second communication mode (e.g., the communication mode of the radio communication device 130 when the vessel enters territorial waters) from the control device 110 via the metal-body communication. The wireless relay device 120 may communicate with the control device 110 via the metal-body communication that transmits a signal using the metal body of the vessel as a medium using a communication circuit.

The wireless relay device 120 according to an embodiment may perform the metal-body communication with another wireless relay device (not shown). For example, a first wireless relay device (e.g., a first wireless relay device 211 of FIG. 2) may transmit, to a second wireless relay device (e.g., a second wireless relay device 222 of FIG. 2), the communication setting information corresponding to the second communication mode received via the metal-body communication from the control device 110. The metal-body communication is further described with reference to FIG. 2.

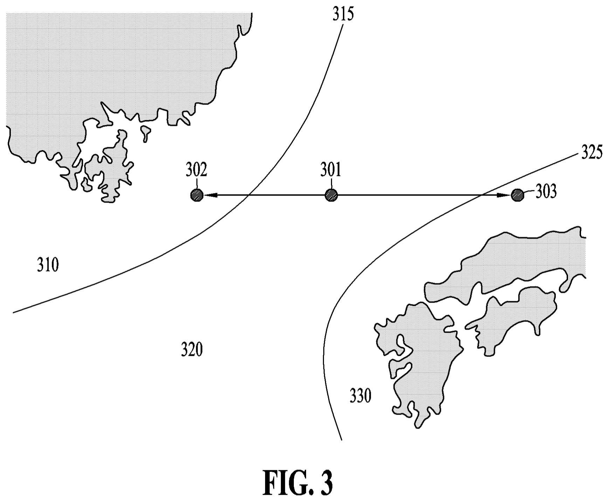

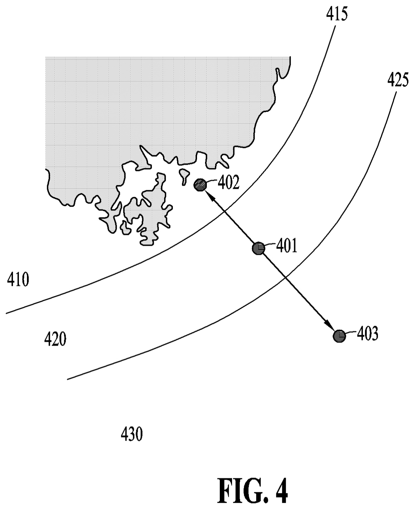

The radio communication device 130 according to an embodiment may receive the communication setting information from the wireless relay device 120. The radio communication device 130 may change at least one of the frequency band used for wireless communication of the radio communication device 130, the frequency of wireless communication, and the signal strength of wireless communication using the received communication setting information. Changing the communication mode of the radio communication device 130 using the communication setting information that the radio communication device 130 receives is further described with reference to FIGS. 3 and 4.

FIG. 2 is a diagram illustrating communication in a vessel using a wireless relay device according to an embodiment.

Referring to FIG. 2, a radio communication device used in a vessel 200 may include a first radio communication device 212 and a second radio communication device 221, and a wireless relay device may include a first wireless relay device 211 and a second wireless relay device 222. The first radio communication device 212 may perform wireless communication with the first wireless relay device 211 in a first wireless communication area 210, and the second radio communication device 221 may perform wireless communication with the second wireless relay device 222 in a second wireless communication area 220.

The radio communication device may adjust a frequency used for wireless communication between radio communication devices based on communication setting information received from the wireless relay device. In response to receiving the communication setting information from the wireless relay device, the radio communication device may change the frequency used for communication between radio communication devices to a frequency used for wireless communication. For example, the first radio communication device 212 may receive communication setting information from the first wireless relay device 211, and in response to receiving the communication setting information, may change at least one of a frequency band used for wireless communication of the first radio communication device 212, a frequency used for wireless communication, and strength of wireless communication respectively to a frequency band, a frequency, and strength of wireless communication included in the received communication setting information.

The first wireless relay device 211 and the second wireless relay device 222 according to an embodiment may be provided in the vessel 200 including metal. The first wireless relay device 211, the second wireless relay device 222, and a control device (not shown) may communicate with each other via metal-body communication using the metal included in the vessel 200.

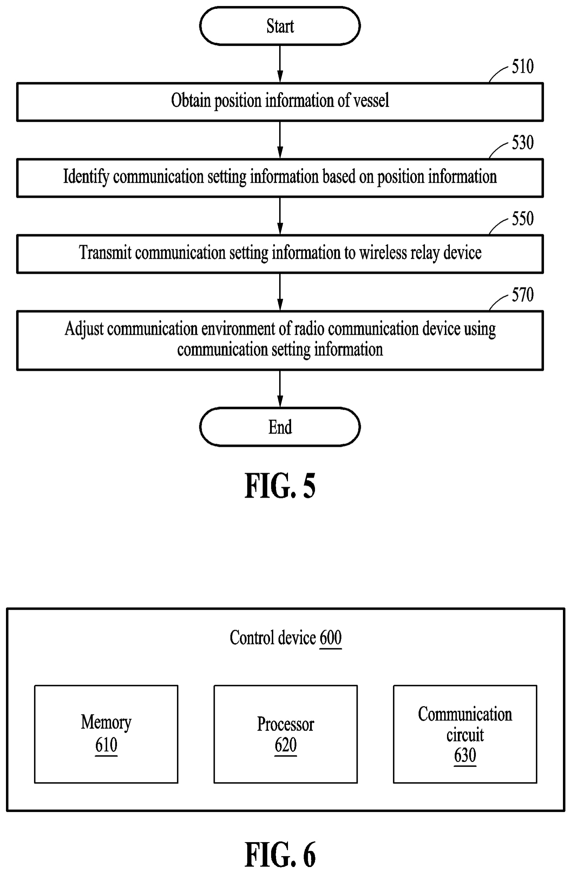

The metal-body communication may indicate a communication method using a metal body as a medium. A wireless relay device (e.g., the first wireless relay device 211) may receive a signal and/or data from a terminal communication device (e.g., the first radio communication device 212) and may transmit the received signal and/or data to another wireless relay device (e.g., the second wireless relay device 222) by using the metal body as a medium. For example, the wireless relay devices 211 and 222 may effectively perform wireless communication using the metal body as a medium in a communication shadow environment where communication using radio waves by a metal body, such as the vessel 200, a container, or a trailer, is difficult. The wireless relay devices 210 and 220 may include an antenna device that is attached to the metal hull of the vessel 200, forms an electromagnetic field on the metal hull, and propagates communication setting information received from a data processor (e.g., a processor 620 of FIG. 6) of the control device via the metal body by loading the communication setting information on the electromagnetic field. The antenna device of the wireless relay devices 210 and 220 may receive a signal and/or data transmitted on the electromagnetic field via the metal body, and the wireless relay devices 210 and 220 may transmit the received signal and/or data to a terminal communication device via their communication channels.

The principle of transmitting a signal and/or data via the metal body is as follows. The metal medium may be, for example, a steel plate or frame structure of the hull. Descriptions are provided based on two cases in which the metal medium is magnetic and in which the metal medium is diamagnetic.

### In the case where the metal medium is magnetic

Conductive layers of a first antenna of the first wireless relay device 211 may form an electromagnetic field on a dielectric layer. Then, an electromagnetic field in which a magnetic field is dominant may be formed on the metal medium. An electric field E1 among the generated electromagnetic field may propagate in a perpendicular direction with the metal medium via an opening surface of the first antenna. The propagated electric field E1 may form an electromagnetic field B, in which a magnetic field is dominant, in the metal medium.

Then, with a similar structure and principle according to the theory of reversibility, a second antenna of the second wireless relay device 222 of a receiver side may receive energy from the electromagnetic field formed in the metal medium. In this process, a change in the electromagnetic field B in which the magnetic field is dominant may be transferred to an electric field E2 in which an electric field is dominant, in the dielectric layer via an opening surface of the second antenna.

In the communication using the metal body as a medium, since the magnetic field is dominant, a change in impedance may be small even if the type and size of the metal medium change. In addition, since the permeability of the metal medium is greater than air, the radio wave transmission efficiency may be superior to a communication system that propagates through air. Accordingly, the communication distance of the communication via the metal medium, which is a magnetic body, may be greater than the communication distance of the magnetic field communication through air. To form an electromagnetic field in which a magnetic field is dominant, a resonant unit and a circuit unit may need to be designed to generate an electric field having a predetermined size in the metal body by the resonant unit and the circuit unit of the wireless relay device.

Due to the electromagnetic field formed in the metal medium, energy may be transferred with a resonator apart from the metal medium by a predetermined distance. Since the electromagnetic field formed in the metal medium has a dominant magnetic field, due to the dominant magnetic field, an electric field may be radiated from the metal medium, and when an antenna resonating an operating frequency is positioned within a predetermined distance from the metal medium, energy may be received.

A dielectric of the dielectric layer of the first antenna or the second antenna may reduce the thickness and size of the resonant unit, and may form the electromagnetic field B in which the magnetic field is dominant in the metal medium to transfer efficient energy.

### In the case where the metal medium is paramagnetic or diamagnetic

A current supplied to a conductive layer may form the electromagnetic field E1 in which an electric field is dominant in the metal medium. In this case, the electric field radiated from the opening surface may not form the electromagnetic field B in which a magnetic field is dominant in the metal medium. This is because the permeabilities of the paramagnetic and diamagnetic bodies are similar to the permeability of air. Accordingly, the metal medium of the paramagnetic or diamagnetic body may not have stronger propagation of the magnetic field in air, such as a ferromagnetic body, and may be propagated with similar magnitude. In other words, a propagation distance may be similar whether in the air or in the metal body.

In the case of pure iron, which is a ferromagnetic body, the permeability may be 4000 to 5000, but for aluminum, which is a paramagnetic, or silver (Ag), which is a diamagnetic, the permeability may be about 1.0, and thus, the strength of magnetic field propagation in the metal body may be different. Accordingly, in this case, a signal may be propagated to a receiver by a current induced in the metal medium from a layer in contact with the metal medium among the conductive layers of the antenna. In this case, the electric field radiated from the opening surface may be induced in the metal body, and due to this, a signal or power may be transmitted.

In the case of a structure having a metal structure as a main structure, such as the vessel 200 (e.g., a liquefied natural gas (LNG) vessel) shown in FIG. 2, radio waves may not pass through the metal and may be reflected and/or attenuated, thereby preventing smooth wireless communication. Accordingly, in the case of a structure including a metal structure, a wireless communication shadow area where wireless communication is difficult or disabled may occur. For example, the wireless communication shadow area may occur in in a pipe duct, an engine room, a bosun store, an engine control room (ECR), or a bow thruster room of the LNG vessel. In this case, what is most required may be an available device for relaying between the wireless communication shadow area and an area, such as a living quarter or upper deck including a cargo control room (CCR), a bridge, and a compass deck, where general wireless communication is smoothly performed as radiation of propagation in air is easy. The wireless relay devices 210 and 220 according to an embodiment may perform a relay role for relaying communication between a wireless communication available area and a wireless communication shadow area.

The wireless relay device may receive communication setting information from a control device (e.g., the control device 110 of FIG. 1). When a maritime zone to which the vessel 200 belongs is changed, the communication setting information may indicate communication setting information that the control device identifies in the changed maritime zone. The wireless relay device may transmit the received communication setting information to a radio communication device around the wireless relay device. For example, the first wireless relay device 211 may transmit the communication setting information received from the control device to the first radio communication device 212, and the second wireless relay device 222 may transmit the communication setting information received from the first wireless relay device 211 to the second radio communication device 221.

FIG. 3 illustrates a change in communication settings of a radio communication device when a vessel enters territorial waters of another country from high seas according to an embodiment.

Referring to FIG. 3, a maritime area according to an embodiment may be divided into territorial waters 310 of a first country, high seas 320, and territorial waters 330 of a second country. The territorial waters 310 of the first country and the high seas 320 may be divided based on a first boundary line 315, and the territorial waters 330 of the second country and the high seas 320 may be divided based on a second boundary line 325. A vessel positioned at a first position 301 of the high seas 320 may enter the territorial waters 310 of the first country or the territorial waters 330 of the second country. A control device may determine whether the vessel enters the territorial waters 310 of the first country, the high seas 320, or the territorial waters 330 of the second country based on position information received from a GPS sensor.

When the vessel positioned at the first position 301 of the high seas 320 according to an embodiment enters a second position 302 of the territorial waters 310 of the first country, in response to receiving communication setting information from a wireless relay device, the control device may cause one or more radio communication devices used in the vessel to change a frequency used for communication between radio communication devices to a frequency used for wireless communication of the territorial waters 310 of the first country. For example, when the vessel positioned at the first position 301 of the high seas 320 enters the territorial waters of the Republic of Korea, in response to receiving communication setting information in the territorial waters of the Republic of Korea from the wireless relay device, the control device may cause the radio communication device used in the vessel to change the frequency used for communication between radio communication devices to 156.600 MHz.

When the vessel positioned at the first position 301 of the high seas 320 according to an embodiment enters a third position 303 of the territorial waters 330 of the second country, in response to receiving the communication setting information from the wireless relay device, the control device may cause the one or more radio communication devices used in the vessel to change the frequency used for communication between radio communication devices to the frequency used for wireless communication of the territorial waters 330 of the second country. For example, when the vessel positioned at the first position 301 of the high seas 320 enters the territorial waters of Japan, in response to receiving the communication setting information in the territorial waters of Japan from the wireless relay device, the control device may change the frequency used for communication between radio communication devices to 156.700 MHz.

FIG. 4 illustrates a change in communication settings of a radio communication device when a vessel enters another maritime zone according to an embodiment.

Referring to FIG. 4, a maritime zone may be divided into coasting (or coastal) waters 410, territorial waters 420, and high seas 430. The coasting waters 410 and the high seas 420 may be divided based on a first boundary line 415, and the territorial waters 420 and the high seas 430 may be divided based on a second boundary line 425. A vessel (e.g., the vessel 200 of FIG. 2) positioned in the territorial waters 420 may enter the coasting waters 410 or the high seas 430. Alternatively, the vessel positioned in the high seas 430 may enter the coasting waters 420. A control device (e.g., the control device 110 of FIG. 1) may determine whether the vessel enters the coasting waters 410, the territorial waters 420, or the high seas 430 based on position information received from a GPS sensor (not shown).

When the maritime zone where the vessel is positioned is changed as the vessel moves, the control device may cause the radio communication device to change the frequency used for wireless communication of the radio communication device. For example, when the control device detects that the vessel enters the second maritime zone from the first maritime zone, the control device may identify the second communication mode. The control device may transmit the communication setting information corresponding to the second communication mode to the wireless relay device so that the wireless relay device transmits the communication setting information corresponding to the second communication mode to one or more radio communication devices. The wireless relay device may transmit the received communication setting information to one or more radio communication devices. In response to receiving the communication setting information from the wireless relay device, the radio communication device that receives the communication setting information may change the frequency used for communication between the radio communication device and the wireless relay device (or communication of the wireless relay device) to the frequency used in the second maritime zone. For example, the radio communication device that receives the communication setting information may change the existing first communication mode to the second communication mode. The second communication mode may indicate a mode having different communication settings from the first communication mode. The first communication mode may indicate a communication mode in the maritime zone (e.g., the territorial waters 420) before the maritime zone of the vessel is changed, and the second communication mode may indicate a communication mode in the maritime zone (e.g., the coasting waters 410) into which the vessel enters. For example, the second communication mode may include at least one of a frequency band of wireless communication used in the second maritime zone (e.g., the coasting waters 410), a frequency used for wireless communication, and a signal strength of wireless communication. In response to receiving the communication setting information from the wireless relay device, the control device may cause one or more radio communication devices to adjust the strength of a signal used for communication of the radio communication device to the signal strength of wireless communication included in the received communication setting information.

A vessel positioned at a first position 401 of the territorial waters 420 according to an embodiment may enter a second position 402 of the coasting waters 410. In this case, the first communication mode may indicate a communication mode when the maritime position of the vessel is in the territorial waters 420, and the second communication mode may indicate a communication mode for communicating with a communication facility of a harbor on land when the maritime position of the vessel is in the coasting waters 410. The coasting waters 410 may indicate a defined area that is closer to land than the territorial waters 420. In response to receiving the communication setting information from the wireless relay device, the control device may cause one or more radio communication devices to change the frequency used for communication between radio communication devices to the frequency (e.g., 156.650 MHz) used for wireless communication of the communication facility of the harbor.

The vessel positioned at the first position 401 of the territorial waters 420 according to an embodiment may enter a third position 403 of the high seas 430. In this case, the first communication mode may indicate a communication mode when the maritime position of the vessel is in the territorial waters 420, and the second communication mode may indicate a communication mode when the maritime position of the vessel is in the high seas 430. In response to receiving the communication setting information from the wireless relay device, the control device may cause one or more radio communication devices to change the frequency used for communication between radio communication devices to the frequency (e.g., 15 MHz) used for wireless communication in the high seas 430.

The vessel positioned at the third position 403 of the high seas 430 according to an embodiment may enter the first position 401 of the territorial waters 420. In this case, the first communication mode may indicate a communication mode when the maritime position of the vessel is in the high seas 430, and the second communication mode may indicate a communication mode when the maritime position of the vessel is in the territorial waters 420. In response to receiving the communication setting information from the wireless relay device, the control device may cause one or more radio communication devices to change the frequency used for communication between radio communication devices to the frequency (e.g., 4 MHz) used for wireless communication in the territorial waters 420.

FIG. 5 illustrates operations of a control method of controlling a communication mode of a radio communication device according to an embodiment. Operations of the control method of controlling a communication mode of a radio communication device may be performed by a control device (e.g., the control device 110 of FIG. 1).

Referring to FIG. 5, in operation 510, the control device may obtain position information of a vessel (e.g., the vessel 200 of FIG. 2). The control device may obtain the position information about a maritime position of the vessel using a GPS sensor or a network based on a base station.

In operation 530, the control device may identify communication setting information based on the position information. When the control device detects that the maritime position of the vessel enters the second maritime zone from the first maritime zone, the control device may identify the communication setting information corresponding to the second communication mode based on the position information of the vessel. The first communication mode may indicate a mode having different communication settings from the second communication mode. The communication mode corresponding to the first maritime zone may indicate the first communication mode, and the communication mode corresponding to the second maritime zone may indicate the second communication mode. The communication setting information may include at least one of a frequency band of wireless communication used in the second maritime zone, a frequency used for wireless communication, and a signal strength of wireless communication.

In operation 550, the control device may transmit the communication setting information to the wireless relay device. For example, the control device may transmit the communication setting information corresponding to the second communication mode to the wireless relay device so that the wireless relay device transmits the communication setting information corresponding to the second communication mode to one or more radio communication devices. The wireless relay device may perform metal-body communication for transmitting a signal using the metal body of the vessel as a medium.

According to an embodiment, when the control device detects that the maritime position of the vessel enters the second maritime zone from the first maritime zone, the control device may generate a notification request signal for the radio communication device to provide a notification of a change in the maritime zone. The control device may transmit the notification request signal to the wireless relay device so that the wireless relay device transmits the notification request signal to one or more radio communication devices.

In operation 570, the control device may adjust the communication environment of the radio communication device using the communication setting information. The communication environment may include the frequency band used for wireless communication, the frequency, and the signal strength of wireless communication. In response to receiving the communication setting information from the wireless relay device, the control device may cause one or more radio communication devices to change the frequency used for communication between radio communication devices to the frequency used for wireless communication of the maritime zone into which the vessel enters. For example, in response to receiving the communication setting information from the wireless relay device, the control device may change the frequency used for communication between the radio communication device and the wireless relay device to the frequency used for wireless communication of the second maritime zone into which the vessel enters. In response to receiving the communication setting information from the wireless relay device, the control device may cause one or more radio communication devices to adjust the strength of a signal used for communication of the radio communication device to the signal strength of wireless communication included in the received communication setting information.

The first communication according to an embodiment may indicate a communication mode when the maritime position of the vessel is in the territorial waters, and the second communication mode may indicate a communication mode for communicating with a communication facility of a harbor on land when the maritime position of the vessel is in an area that is defined as a closer area to land than the territorial waters. In response to receiving the communication setting information from the wireless relay device, the control device may cause one or more radio communication devices to change the frequency used for communication between radio communication devices to the frequency used for wireless communication of the communication facility of the harbor.

The first communication mode according to an embodiment may indicate a communication mode when the maritime position of the vessel is in the territorial waters, and the second communication mode may indicate a communication mode when the maritime position of the vessel is in the high seas. In response to receiving the communication setting information from the wireless relay device, the control device may cause one or more radio communication devices to change the frequency used for communication between radio communication devices to the frequency used for wireless communication of the high seas.

The first communication mode according to an embodiment may indicate a communication mode when the maritime position of the vessel is in the high seas, and the second communication mode may indicate a communication mode when the maritime position of the vessel is in the territorial waters. In response to receiving the communication setting information from the wireless relay device, the control device may cause one or more radio communication devices to change the frequency used for communication between radio communication devices to the frequency used for wireless communication of the territorial waters.

FIG. 6 is a block diagram of components of a control device according to an embodiment.

Referring to FIG. 6, a control device 600 may include a memory 610, a processor 620, and a communication circuit 630. The control device 600 may correspond to the control device 110 of FIG. 1.

The memory 610 may include instructions executable by the processor 620. When the instructions executable by the processor 620 are executed by the processor 620, the instructions may cause the processor 620 to perform a control method of controlling a communication mode. The memory 610 may be integrated with a processor. For example, random access memory (RAM) or flash memory may be integrated with a processor, such as an integrated circuit (IC) microprocessor. The memory 610 may include a separate device, such as an external disk drive, a storage array, or other storage devices used by a database system. Since the memory 610 and the processor 620 may be operatively integrated or communicate with each other via an input/output (I/O) port or network connection, the processor 620 may read a file stored in the memory 610. The memory 610 may be a computer-readable storage medium for storing instructions, and when the instructions stored in the memory 610 are executed by the processor 620, the instructions may prompt the processor 620 to perform a control method by the control device 600 to control a communication mode of a radio communication device.

The computer-readable storage media may include read only memory (ROM), programmable ROM (PROM), electrically erasable PROM (EEPROM), RAM, dynamic RAM (DRAM), static RAM (SRAM), flash memory, non-volatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, BLU-RAY or optical disk memory, hard disk drive (HDD), solid state drive (SSD), card memory (e.g., a multimedia card, a secure digital (SD) card, or an extreme digital (XD) card), magnetic tape, floppy disk, a magneto-optical data storage device, an optical data storage device, and other devices.

The communication circuit 630 may allow the control device and the wireless relay device to perform metal-body communication for transmitting a signal using the metal body of the vessel as a medium. The communication circuit 630 may include one or more communication processors that are operated independently of a processor 620 and support wireless communication. The communication circuit 630 may be implemented as a single chip or a plurality of chips. The communication circuit 630 may transmit communication setting information according to the maritime zone of the vessel to the wireless relay device.

The processor 620 may execute instructions stored in the memory 610. The processor 620 may include a central processing unit (CPU), a graphics processing unit (GPU), a neural processing unit (NPU), a media processing unit (MPU), a data processing unit (DPU), a vision processing unit (VPU), a video processor, an image processor, a display processor, a microprocessor, a processor core, a multi-core processor, an application-specific integrated circuit (ASIC), a field programmable gate array (FPGA), or a combination thereof. When the instructions are executed by the processor 620, the processor 620 may cause the control device 600 to perform the operations of the control method of controlling a communication mode of a radio communication device described herein.

The control device 600 may obtain position information about the maritime position of the vessel, may identify communication setting information corresponding to the second communication mode when it is detected that the maritime position of the vessel enters the second maritime zone corresponding to the second communication mode from the first maritime zone corresponding to the first communication mode, and may transmit the communication setting information corresponding to the second communication mode so that the wireless relay device transmits the communication setting information corresponding to the second communication mode to one or more radio communication devices. The first communication mode may have different communication settings from the second communication mode. The communication setting information may include at least one of a frequency band of wireless communication used in the second maritime zone, a frequency used for wireless communication, and a signal strength of wireless communication.

In response to receiving the communication setting information from the wireless relay device, the control device 600 may cause one or more radio communication devices to change the frequency used for communication between radio communication devices to the frequency used for wireless communication.

The first communication mode according to an embodiment may indicate a communication mode when the maritime position of the vessel is in the territorial waters, and the second communication mode may indicate a communication mode for communicating with a communication facility of a harbor on land when the maritime position of the vessel is in an area that is defined as a closer area to land than the territorial waters. In response to receiving the communication setting information from the wireless relay device, the control device 600 may cause one or more radio communication devices to change the frequency used for communication between radio communication devices to the frequency used for wireless communication of the communication facility of the harbor.

The first communication mode according to an embodiment may indicate a communication mode when the maritime position of the vessel is in the territorial waters, and the second communication mode may indicate a communication mode when the maritime position of the vessel is in the high seas. In response to receiving the communication setting information from the wireless relay device, the control device 600 may cause one or more radio communication devices to change the frequency used for communication between radio communication devices to the frequency used for wireless communication of the high seas.

The first communication mode according to an embodiment may indicate a communication mode when the maritime position of the vessel is in the high seas, and the second communication mode may indicate a communication mode when the maritime position of the vessel is in the territorial waters. In response to receiving the communication setting information from the wireless relay device, the control device 600 may cause one or more radio communication devices to change the frequency used for communication between radio communication devices to the frequency used for wireless communication of the territorial waters.

In response to receiving the communication setting information from the wireless relay device, the control device 600 may cause one or more radio communication devices to change the frequency used for communication between the radio communication device and the wireless relay device to the frequency used for wireless communication.

In response to receiving the communication setting information from the wireless relay device, the control device 600 may cause one or more radio communication devices to adjust the strength of a signal used for communication of the radio communication device to the signal strength of wireless communication included in the received communication setting information.

When the control device 600 detects that the maritime position of the vessel enters the second maritime zone from the first maritime zone, the control device 600 may generate a notification request signal for the radio communication device to provide a notification of a change in the maritime zone and may transmit the notification request signal to the wireless relay device so that the wireless relay device transmits the notification request signal to one or more radio communication devices.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, an FPGA, a programmable logic unit (PLU), a microprocessor, or any other device capable of responding to and executing instructions in a defined manner. The processing device may run an operating system (OS) and a software application that runs on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as ROM, RAM, flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Accordingly, other implementations are within the scope of the following claims.

## Claims

1. A control device (110, 600) for controlling a communication mode of a radio communication device (130) based on a position of a vessel (200), the control device comprising:
memory (610) storing instructions;
a processor (620) executing the instructions stored in the memory (610); and
a communication circuit (630) communicating with a wireless relay device (120) via metal-body communication for transmitting a signal using a metal body of the vessel (200) as a medium,
wherein the instructions, when executed by the processor (620), cause the control device (110, 600) to:
obtain position information about a maritime position of the vessel (200),
based on the position information of the vessel (200), when the maritime position of the vessel (200) entering a second maritime zone corresponding to a second communication mode from a first maritime zone corresponding to a first communication mode is detected, identify communication setting information corresponding to the second communication mode, and
transmit the communication setting information corresponding to the second communication mode to the wireless relay device (120) to cause the wireless relay device (120) to transmit the communication setting information corresponding to the second communication mode to one or more radio communication devices (130),
wherein the first communication mode is a mode having different communication settings from the second communication mode.

2. The control device (110, 600) of claim 1, wherein the communication setting information comprises at least one of a frequency band of wireless communication used in the second maritime zone, a frequency used for the wireless communication, and a strength of a signal of the wireless communication.

3. The control device (110, 600) of claim 2, wherein the instructions, when executed by the processor (620), cause the control device (110, 600) to, in response to receiving the communication setting information from the wireless relay device (120), cause the one or more radio communication devices (130) to change a frequency used for communication between radio communication devices (130) to a frequency used for the wireless communication.

4. The control device (110, 600) of claim 3, wherein the first communication mode indicates a communication mode when the maritime position of the vessel (200) is in territorial waters, and
the second communication mode indicates a communication mode for communicating with a communication facility of a harbor on land when the maritime position of the vessel (200) is in an area defined as closer to the land than the territorial waters,
wherein the instructions, when executed by the processor (620), cause the control device (110, 600) to, in response to receiving the communication setting information from the wireless relay device (120), cause the one or more radio communication devices (130) to change a frequency used for communication between the one or more radio communication devices (130) to a frequency used for wireless communication of the communication facility of the harbor.

5. The control device (110, 600) of claim 3, wherein the first communication mode indicates a communication mode when the maritime position of the vessel (200) is in territorial waters, and
the second communication mode indicates a communication mode when the maritime position of the vessel (200) is in high seas,
wherein the instructions, when executed by the processor (620), cause the control device (110, 600) to, in response to receiving the communication setting information from the wireless relay device (120), cause the one or more radio communication devices (130) to change a frequency used for communication between the one or more radio communication devices (130) to a frequency used for wireless communication of the high seas.

6. The control device (110, 600) of claim 3, wherein the first communication mode indicates a communication mode when the maritime position of the vessel (200) is in high seas, and
the second communication mode indicates a communication mode when the maritime position of the vessel (200) is in territorial waters,
wherein the instructions, when executed by the processor (620), cause the control device (110, 600) to, in response to receiving the communication setting information from the wireless relay device (120), cause the one or more radio communication devices (130) to change a frequency used for communication between the one or more radio communication devices (130) to a frequency used for wireless communication of the territorial waters.

7. The control device (110, 600) of one of claims 2 to 6, wherein the instructions, when executed by the processor (620), cause the control device (110, 600) to, in response to receiving the communication setting information from the wireless relay device (120), cause the one or more radio communication devices (130) to change a frequency used for communication between the radio communication device (130) and the wireless relay device (120) to a frequency used for the wireless communication.

8. The control device (110, 600) of one of claims 2 to 6, wherein the instructions, when executed by the processor (620), cause the control device (110, 600) to, in response to receiving the communication setting information from the wireless relay device (120), cause the one or more radio communication devices (130) to adjust a strength of a signal used for communication of the radio communication device (130) to a signal strength of the wireless communication included in the received communication setting information.

9. The control device (110, 600) of one of claims 1 to 8, wherein the instructions, when executed by the processor (620), cause the control device (110, 600) to:
when the maritime position of the vessel (200) entering the second maritime zone from the first maritime zone is detected, generate a notification request signal for the radio communication device (130) to provide a notification of a change in a maritime zone, and
transmit the notification request signal to the wireless relay device (120) to cause the wireless relay device (120) to transmit the notification request signal to the one or more radio communication devices (130).

10. A control method of controlling a communication mode of a radio communication device (130) using a control device (110, 600), the control method comprising:
obtaining position information about a maritime position of a vessel (200);
based on the position information of the vessel (200), when the maritime position of the vessel (200) entering a second maritime zone corresponding to a second communication mode from a first maritime zone corresponding to a first communication mode is detected, identifying communication setting information corresponding to the second communication mode; and
transmitting communication setting information corresponding to the second communication mode to the wireless relay device (120) to cause the wireless relay device (120) to transmit the communication setting information corresponding to the second communication mode to one or more radio communication devices (130),
the first communication mode is a mode having different communication settings from the second communication mode, and
the wireless relay device (120) performs metal-body communication for transmitting a signal using a metal body of the vessel (200) as a medium.

11. The control method of claim 10, wherein the communication setting information comprises at least one of a frequency band of wireless communication used in the second maritime zone, a frequency used for the wireless communication, and a strength of a signal of the wireless communication.

12. The control method of claim 11, wherein, in response to receiving the communication setting information from the wireless relay device (120), the one or more radio communication devices (130) change a frequency used for communication between the one or more radio communication devices (130) to a frequency used for the wireless communication.

13. The control method of claim 12, wherein the first communication mode indicates a communication mode when the maritime position of the vessel (200) is in territorial waters,
the second communication mode indicates a communication mode for communicating with a communication facility of a harbor on land when the maritime position of the vessel (200) is in an area defined as closer to the land than the territorial waters, and
in response to receiving the communication setting information from the wireless relay device (120), the one or more radio communication devices (130) change a frequency used for communication between the one or more radio communication devices (130) to a frequency used for wireless communication of the communication facility of the harbor.

14. The control method of claim 12, wherein the first communication mode indicates a communication mode when the maritime position of the vessel (200) is in territorial waters,
the second communication mode indicates a communication mode when the maritime position of the vessel (200) is in high seas, and
in response to receiving the communication setting information from the wireless relay device (120), the one or more radio communication devices (130) change a frequency used for communication between the one or more radio communication devices (130) to a frequency used for wireless communication of the high seas.

15. The control method of claim 12, wherein the first communication mode indicates a communication mode when the maritime position of the vessel (200) is in high seas,
the second communication mode indicates a communication mode when the maritime position of the vessel (200) is in territorial waters, and
in response to receiving the communication setting information from the wireless relay device (120), the one or more radio communication devices (130) change a frequency used for communication between the one or more radio communication devices (130) to a frequency used for wireless communication of the territorial waters.
